# EUROPEAN PATENT SPECIFICATION

(11) **EP 2 633 270 B1**
(45) Date of publication and mention of the grant of the patent: **06.05.2015**
(21) Application number: 10784458.1
(22) Date of filing: 26.10.2010
(51) Int. Cl.: G01C 21/32, G09B 29/10

(54) **METHOD FOR DETECTING GRADE SEPARATED CROSSINGS AND UNDERPASSES**
VERFAHREN ZUR ERKENNUNG VON KREUZUNGEN AUF UNTERSCHIEDLICHEN EBENEN UND UNTERFÜHRUNGEN
PROCÉDÉ DE DÉTECTION DE CROISEMENTS À NIVEAUX SÉPARÉS ET DE PASSAGES INFÉRIEURS

(43) Date of publication of application: 04.09.2013
(73) Proprietor: Tomtom Belgium N.V., 9050 Gent (BE)
(72) Inventor: BEKEART, Tim, B-8501 Heule (BE)
(74) Representative: Dobson, Adrian
(86) International application number: PCT/EP2010/066121
(87) International publication number: WO 2012/055427

(56) References cited:
- WO-A1-2008/140166
- DE-A1- 19 847 375
- US-A1- 2008 262 722

## Description

### BACKGROUND OF THE INVENTION

### Field of the Invention

This invention relates generally to digital maps of the type for displaying road or pathway information, and more particularly to a method for detecting grade separated crossings, underpasses and tunnels for incorporation in a digital map.

### Related Art

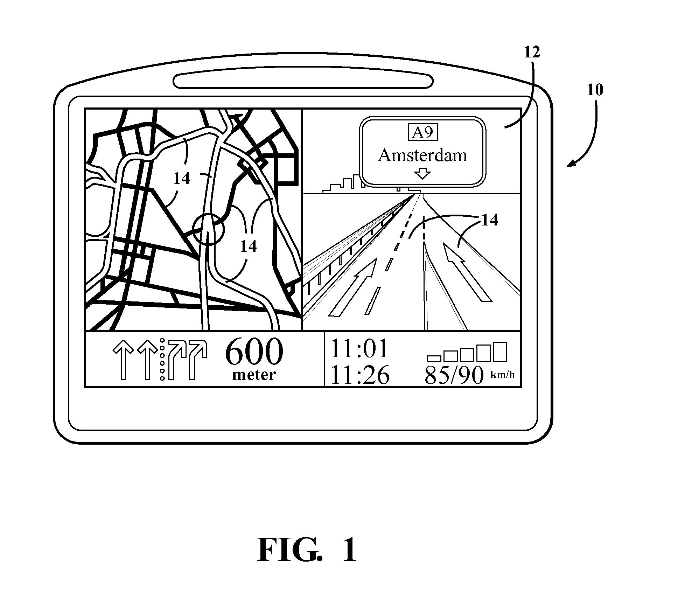

Personal navigation devices like that shown, for example, in Figure 1 utilize digital maps combined with accurate positioning data from GPS or other data streams. These devices have been developed for many applications, such as navigation assistance for automobile drivers. The effectiveness of these devices is inherently dependent upon the accuracy of the information provided to them in the form of digital maps, stored in their memory or otherwise accessed through a suitable database connection such as wireless signal, cable, telephone line, etc.

Typically, the navigation device 10 (Figure 1) includes a display screen 12 that portrays a portion of a stored digital map as a network of roads 14. A traveler having access to the GPS-enabled navigation device 10 may then be generally located on the digital map close to or with regard to a particular road 14 or segment thereof. Some GPS-enabled navigation devices 10, such as several models manufactured by TomTom NV (www.tomtom.com), may also be configured as probes to passively generate probe measurement points, also referred to as probed traces, at intervals of time, such as randomly spaced, irregular or regular intervals. Such probe traces comprise a sequence of discrete geo-coded positions recorded at, for example, regular intervals of five seconds. Of course, other suitable devices may be used to generate probe measurement points including, for example, handheld devices, mobile phones, PDAs, and the like. Thus, probe data may be described as a set of information pertaining to movement of a vehicle (or a person carrying a probe device) which contains time-stamped geo-coding (geographic locations identified by latitude/longitude coordinates) and possibly also metadata (vehicle speed, receiver type, vehicle type, precision, source, accuracy, etc.).

It is known to take collections of probe measurements for the purpose of incrementally creating and/or updating digital maps. The probe measurements can be transmitted real-time or subsequent monitoring, such as to a collection service or other map data analysis service via wireless (e.g., cellular) transmission, internet uploads, or by other convenient communication methods. Internet uploads may be synchronized to occur in conjunction with digital map upgrades which navigation device users might obtain as part of a service. From the collection of probe measurements, road geometries can be inferred and other features and attributes derived by appropriate analytical methods.

A typical collection of probe measurements collected from a plurality of probes traversing a particular section of a digital map over a period of time may contain billions of discrete data points, each geo-coded and time stamped. Probe traces collected over time can be grouped according to those which match with a common area of the digital map and then overlaid for interpretation by map database editors. These editors use various mathematic and statistical techniques to determine or infer road geometries, compute speed profiles, acceleration profiles, direction of travel, altitude, detect changes in road networks, to compare two road networks, and many other specifications.

As suggested above, the effectiveness of a personal navigation device 10 depends upon the accuracy of the information contained in the digital map. As such, digital map providers continuously strive to improve and update their maps in as efficient and economical manner as possible. However, in making attempts to be efficient and economical, inaccurate data can be obtained. Inaccurate data, for example, may be compromise the ability of the navigation device 10 to compute optimal routes in response to a navigation query, or to provide other reliable information to a traveler. Thus, the inaccurate or incomplete information contained in a digital map can result in poor or erroneous navigation instructions and lead to undesirable navigation decisions. For example, some vehicles, e.g. specialty vehicles including fuel trucks, volatile material hauling vehicles, and oversized vehicles, need to navigate routes generally free of obstacles, e.g. low bridges or tunnels, and bridges capable of carrying the weight of the vehicle load. Accordingly, for some travelers, it is imperative that the digital maps accurately depict the roads and their features. Thus, the existence or nonexistence of a bridge or tunnel constitutes an important detail to be accurately recorded in a digital map.

The prior art document DE19847375 A1 discloses a method for detecting a grade separated crossing according to the preamble of claim 1.

The prior art document WO2008/140166 A1 discloses a navigation map matching method determining whether a moving object deviates from a route into a shadow area based on a positioning error. The prior art document US2008/0262722 A1 discloses a method for identifying a tunnel based on the quality of a position signal.

Until now, methods used to accurately determine whether a route includes a grade separated crossing (i.e. combination overpass/underpass), underpass or a tunnel require obtaining a large quantity of traces using altitude data of the traces, wherein each trace point is analyzed to obtain a distribution of altitude points using statistical methods, e.g., Gaussian distributions on the altitude point distribution. However, performing this detailed analysis requires first, the altitude information be available; second, the altitude information to be of sufficient resolution; third, the altitude information to be reliable, and lastly, the altitude data needs to be precisely located, and not lagged behind the direction of movement due to smoothing effects of GPS receivers. Therefore, there is a need in the art for an improved method for efficiently obtaining accurate data regarding the precise locations of grade separated crossings and tunnels in an economical manner.

### SUMMARY OF THE INVENTION

This invention relates to methods and techniques for obtaining accurate data regarding the precise locations of grade separated crossings and tunnels. The method provides a system that enables probe data to be efficiently collected and accurately evaluated to determine the existence and precise locations of a grade separated crossings and tunnels. The method includes a digital map having at least one of two grade separated road segments crossing one another or a road segment traversing a tunnel. The method further includes reporting data via a plurality of probe traces from a GPS-enabled device traversing the road segments, wherein the reported data includes dilution of precision (DOP) values. Then, the method includes collecting the probe traces and analyzing them to determine where the DOP values are relatively strong and where they are relatively weak. Then, the method includes associating the location of a grade separated crossing or tunnel via the detected weak DOP values.

In accordance with another aspect of the invention, a method for determining an underpass existence in a digital map by observing probe data is provided. The method includes the steps of providing a digital map having at least one road segment and reporting data from a plurality of probe traces traveling along the at least one road segment. Further, analyzing the reported data for dilution of precision (DOP) values, and then, inferring the existence of an underpass along the at least one road segment if the DOP values suddenly decrease from a substantially constant value to a decreased value and then suddenly return to the substantially constant value.

Principles of this invention can be used to effectively locate grade separated road crossings and underpasses where relatively low DOP values exist along a digital map. The low DOP values indicate obstruction of the respective signal owing to an overhead structural obstruction of some sort. Further, the road comprising the overpass and the road comprising the underpass can be readily determined by analyzing the respective traces for their DOP values. Further, if a single road is being analyzed, the relatively low DOP values can be reliably attributed to an underpass. Accordingly, this invention enables a new use for information obtained from community input or other probe measurement collection techniques to economically and reliably detect grade separated crossing and underpasses.

### BRIEF DESCRIPTION OF THE DRAWINGS

These and other aspects, features and advantages will be readily apparent to those skilled in the art in view of the following detailed description of presently preferred embodiments and best mode, appended claims, and accompanying drawings, in which:
Figure 1 is an exemplary view of a portable navigation device according to one embodiment of this invention including a display screen for presenting map data information;
Figure 2 is a highly simplified plan view of a digital map having a grade separated crossing (e.g., two roads crossing one another via a bridge);
Figure 3 is a view of the digital map in Figure 2 overlaid with general DOP signal strength received via probe data via GPS-enabled devices traveling along the respective roads;
Figure 4 is a graph of the DOP values from collected probe data via GPS-enabled devices traveling along one of the roads of the digital map of Figure 2; and
Figure 5 is a highly simplified plan view of a road traversing an underpass overlaid with general DOP signal strength received via probe data via GPS-enabled devices traveling along the respective roads.

### DETAILED DESCRIPTION OF PREFERRED EMBODIMENTS

Referring in more detail to the drawings, wherein like numerals indicate like or corresponding parts throughout the several views, this invention pertains generally to digital maps as used by navigation systems and devices 10, as well as other map applications which may include those viewable through internet enabled computers, PDAs, cellular phones, and the like.

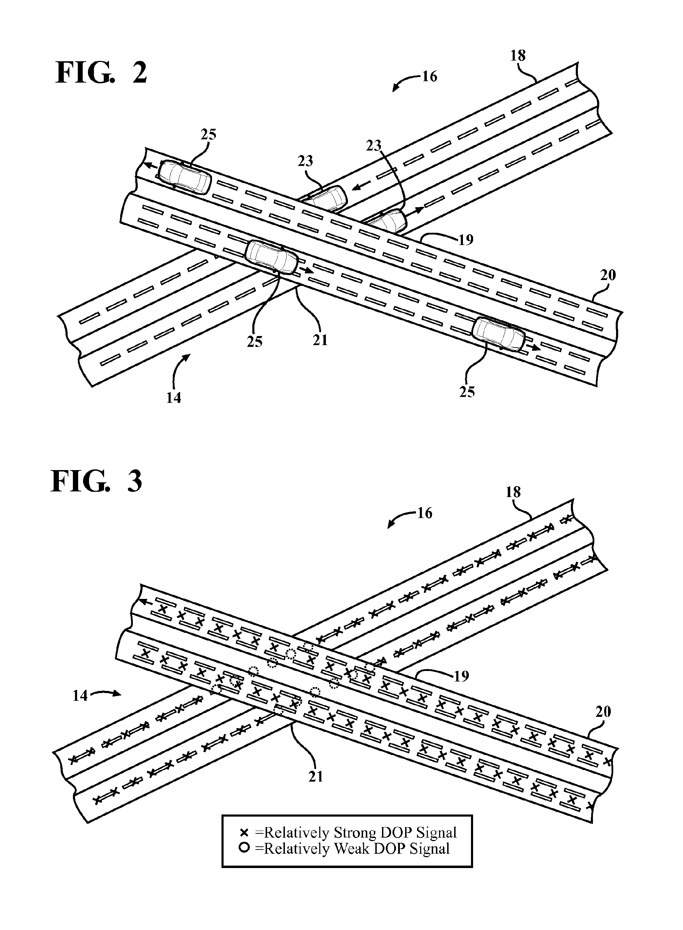

Figure 2 depicts, in highly simplified form, a grade separated crossing 16 in the form of a plurality of roads, shown as a pair of roads 18, 20. Of course, there are many different possible configurations of grade separated crossings, with only a simplified embodiment be discussed and shown, by way of example and without limitation. Accordingly, the different possible configurations of grade separated crossings not discussed or shown in detail are intended to be included within the definition of grade separated crossing 16, such as multiple roads, bridges, railways, tunnels or variations combinations thereof which overlie one another at least in part.

In the Figure 2 example, the road segments 18, 20 comprise those portions of an overall road network 14 contained in a digital map. Typically, the road segments 18, 20 will be of the type capable of supporting vehicular traffic flow, such as shown with automobiles 23, 25, although the principles of this invention are equally applicable to other modes of transportation as well.

The road segments 18, 20, as is typical where the travel of vehicles thereon is intended to flow in a substantially uninterrupted manner, are configured at least partially along separate grades, such that one road segment 18 underlies the other road segment 20. Accordingly, one of the road segments 20 extends over a bridge portion 19 in overlying relation to provide an overpass to an underlying underpass portion of the other road segment 18. It is important for some travelers to be made aware of whether a crossing represents a common grade crossing, or a grade separated crossing, such as, for example, overpass bridges and underpasses. In the former case, vehicles may need to know if they can make necessary turns along a common grade crossing, or in the latter case, the vehicles may need to be aware of any road load capacity requirements, bridge height requirements, width requirements, or the like, for example. As such, having advance notification of common grade crossing or a grade separated crossing, e.g., a bridge or other type of grade separated crossing, can prove to be of great importance in mapping a travel route for some travelers.

Figure 3 is a view of the same section of digital map as presented in Figure 2, but with overlay data from probe traces as collected from vehicles with appropriately enabled probe devices, such as the device 10 of Figure 1. A plurality of probe traces can be observed from the reported data from the vehicles 23, 25 traveling along the road segments 18, 20. This reported data includes DOP values, perhaps as metadata, or enable the derivation of velocity information by the time-stamped position measurements embodied in each probe trace, for example. From the DOP values, in accordance with the invention, it is possible to detect the grade separated crossing 16 of the road segments. In this particular example, the reported DOP values (transmitted from vehicles 25 traversing the overpass) remain constant or substantially constant across one of the segments 20, while the reported DOP values (transmitted from vehicles 23 traversing the underpass) decrease dramatically from a substantially constant value over a small portion of the other road segment 18, that constituting the underpass, and then return suddenly to the substantially constant value (see legend indicating (x) and (o) relative signal strength). Accordingly, it can be readily inferred that the change in DOP values indicates an obstruction to the reported signals transmitted from the vehicles 23, given the decreased DOP values occur repeatedly in the same detected geo-coded location of the road segment 18.

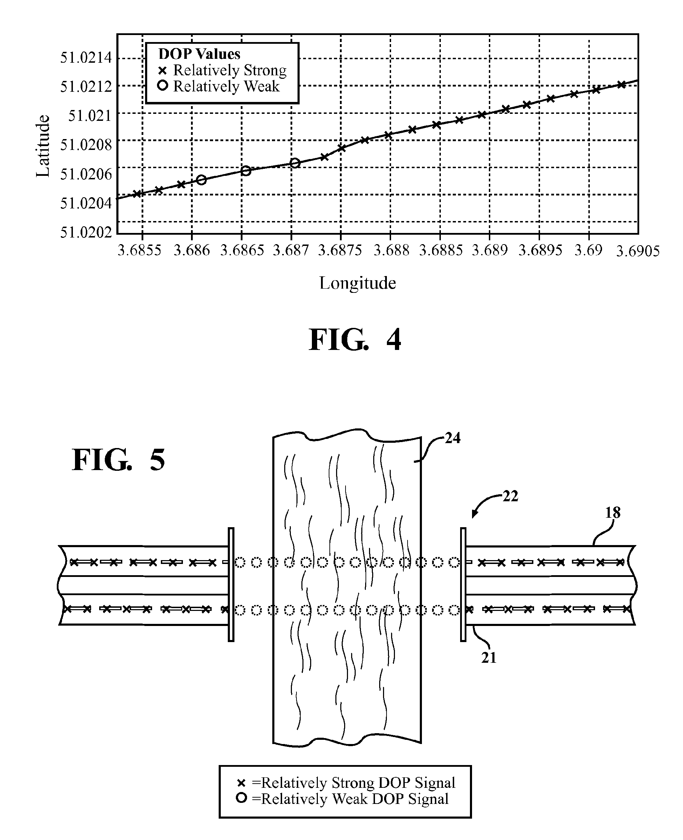

As shown in Figure 4 in line graph form, the DOP values received along the road segment can be attributed to a precise geo-coded position (latitude and longitude). Accordingly, when the DOP values remain substantially constant over time, whether indicating a strong signal or a weak signal, it can be concluded that what ever is impacting the DOP value is a fixed barrier, and not a temporary obstruction. Further, in a case where separate road segments 18, 20 cross one another, if DOP values remain relatively constant and strong along one road segment 20, it can be concluded that nothing is impeding the signal strength being received, and thus, that nothing is overlying the road segment 20 or otherwise presenting a barrier to the received signal. However, if the DOP values are temporarily poor along the other road segment 18, changing from a relatively strong signal, to a relatively weak signal, and then suddenly returning to a relatively strong signal, then it can be readily concluded that the road segment 18 has a temporary overhead obstruction, thus indicating that the road segment 18 passes beneath a bridge portion of the other road segment 20.

It will therefore be appreciated that the DOP value distribution for probe traces from vehicles traveling along roads that cross at a regular crossing will typically have a single peak. Meanwhile, the DOP value distribution for the lower road at a grade separated crossing, i.e. the DOP values of traces from vehicles going inside a tunnel, underneath a bridge, etc, will typically have two distinguishable peaks. Accordingly, and by way of example, the DOP value distributions associated with crossing roadways can be fitted with Gaussian distributions and the respective means of these distributions compared to determine if the roadways cross each other at a regular or a grade separated crossing.

As shown in Figure 4, the DOP values received can be geo-coded. Thus, the location identified by the particular latitude and longitude of a trace signal can be plotted, and over time, a trend is established. As such, the strong and weak DOP values received can be monitored to see if an anomaly is present, or contrarily, if a continuous pattern is present. In the example shown, a continuous pattern of a weak DOP value is plotted along a portion of road segment 18, thereby reliably indicating an underpass beneath the overlying bridge portion of the road segment 20.

As shown in Figure 5, the method in accordance with the invention can be applied to detect the presence of not only of grade separated crossings, but also of a tunnel 22. Using the same logic discussed above, standard DOP values readily available from GPS-enabled navigation systems or devices 10, as well as other map applications, can be collected and analyzed to assess whether a road 18 traverses a tunnel, such as the tunnel 22 depicted providing an underpass 21 traversing a river 24. As with a bridge, when a vehicle equipped with appropriately enabled probe devices travels through the tunnel 22, the DOP values decrease immediately upon entering the tunnel 22, and then return immediately to relatively increased values.

Of course, although not required, it should be recognized that the DOP values received can be combined with a variety of other types of information to further enhance the ability to represent an accurate digital map, such as standard altitude data, for example, and to assist with routing operations on the digital map.

## Claims

1. A method for detecting a grade separated crossing in a digital map using probe data, said method comprising the steps of:
providing a digital map having at least two road segments (18, 20) crossing one another;
obtaining data from a plurality of probe traces traveling along the at least two road segments (18, 20) at least over a crossing portion of the road segments (18, 20), said data comprising dilution of precision (DOP) values for a plurality of locations along the at least two road segments;
**characterized in that** the method comprises the steps of:
comparing the DOP values for the at least two road segments (18, 20); and
determining the presence or absence of a grade separated crossing (16) between the at least two road segments (18, 20) based on said comparison.

2. The method of claim 1, comprising:
inferring a grade separated crossing (16) between the at least two road segments (18, 20) if the DOP values for at least one of the at least two road segments (18, 20) decreases, such as from a substantially constant value to a decreased value, and then increases, such as returns to the substantially constant value, at or in the vicinity of the crossing portion of the road segments.

3. The method of claim 1 or 2, wherein the obtained data comprises altitude data, and said method further includes:
associating the DOP value for a location with an altitude value for the location, and preferably associating all obtained DOP values with the altitude value for the respective locations.

4. The method according to one of the preceding claims, wherein the obtained data comprises geo-coded data, and said method further includes:
associating the DOP value for a location with the latitude and longitude for the location, and preferably associating all obtained DOP values with the latitude and longitude for the respective locations.

5. The method according to one of the preceding claims, wherein said comparing the DOP values for the at least two road segments (18, 20) comprises:
comparing the distribution of DOP values obtained for each of the at least two road segments (18, 20).

6. The method of claim 5, comprising:
fitting a Gaussian distribution to the distribution of DOP values obtained for each of the at least two road segments (18, 20);
determining a mean for each of Gaussian distributions; and
comparing the means to determine the presence or absence of a grade separated crossing (16) between the at least two road segments (18, 20).

7. The method according to any of the preceding claims, wherein said probe traces are generated by a plurality of vehicles, such as a motor vehicles (23, 25), that each comprise a location-determining device, such as a GPS-enabled device, and that travel over the at least two road segments (18, 20).

8. The method according to any of the preceding claims, wherein said grade separated crossing is selected from the group consisting of: (i) a tunnel; and (ii) an underpass.

## Patentansprüche

1. Verfahren zum Detektieren einer höhenfreien Kreuzung in einer digitalen Karte unter Verwendung von Daten von Messfühlern, wobei das besagte Verfahren die folgenden Schritte umfasst:
Bereitstellen einer digitalen Karte mit zumindest zwei sich kreuzenden Straßensegmenten (18, 20);
Beziehen von Daten von einer Vielzahl von Messfühler-Spuren, die entlang der zumindest zwei Straßensegmente (18, 20) über zumindest einen kreuzenden Anteil der Straßensegmente (18, 20) verlaufen, wobei besagte Daten Werte zur Verringerung der Genauigkeit (DOP) für eine Vielzahl von Positionen entlang der zumindest zwei Straßensegmente umfassen;
**dadurch gekennzeichnet, dass**
das Verfahren die Folgenden Schritte umfasst:
Vergleichen der DOP-Werte für die zumindest zwei Straßensegmente (18, 20); und
Bestimmen der Anwesenheit oder Abwesenheit einer höhenfreien Kreuzung (16) zwischen den zumindest zwei Straßensegmenten (18, 20) basierend auf dem besagten Vergleich.

2. Das Verfahren nach Anspruch 1, das Folgende umfassend:
Rückschließen auf eine höhenfreie Kreuzung (16) zwischen den zumindest zwei Straßensegmenten (18, 20), wenn der DOP-Wert für zumindest eins der zumindest zwei Straßensegmente (18, 20) abnimmt, wie zum Beispiel von einem im Wesentlichen konstanten Wert auf einen verringerten Wert, und dann zunimmt, zum Beispiel zu dem im Wesentlichen konstanten Wert zurückkehrt, an dem oder in der Nähe des kreuzenden Teils der Straßensegmente.

3. Das Verfahren aus Anspruch 1 oder 2, wobei die gewonnenen Daten Höhendaten umfassen und das besagte Verfahren zudem das Folgende umfasst:
Verbinden des DOP-Werts für eine Position mit einem Höhenwert für die Position und vorzugsweise Verbinden aller gewonnenen DOP-Werte mit dem Höhenwert für die zugehörigen Positionen.

4. Das Verfahren nach einem der vorherigen Ansprüche, wobei die erhaltenen Daten geokodierte Daten umfassen und das besagte Verfahren zudem das Folgende umfasst:
Verbinden des DOP-Werts für eine Position mit der Breite und Länge der Position und vorzugsweise Verbinden aller erhaltenen DOP-Werte mit der Breite und Länge für die entsprechenden Positionen.

5. Das Verfahren nach einem der vorherigen Ansprüche, wobei besagtes Vergleichen der DOP-Werte der zumindest zwei Straßensegmente (18, 20) das Folgende umfasst:
Vergleichen der Verteilung der DOP-Werte, die für jedes der zumindest zwei Straßensegmente (18, 20) gewonnen wurden.

6. Das Verfahren nach Anspruch 5, das Folgende umfassend:
Anpassen einer Gaußschen Verteilung an die Verteilung der DOP-Werte, die für jedes der zumindest zwei Straßensegmente (18, 20) gewonnen wurden;
Bestimmen eines Mittelwerts für jede der Gaußschen Verteilungen; und
Vergleichen der Mittelwerte, um die Anwesenheit oder Abwesenheit einer höhenfreien Kreuzung (16) zwischen den zumindest zwei Straßensegmenten (18, 20) zu bestimmen.

7. Das Verfahren nach einem der vorherigen Ansprüche, wobei die besagte Messfühler-Spuren durch eine Vielzahl von Fahrzeuge, wie zum Beispiel Kraftfahrzeuge (23, 25), erzeugt werden, die jeweils ein Positionsbestimmungsgerät, wie zum Beispiel ein mit GPS ausgestattetes Gerät, umfassen und die sich über die zumindest zwei Straßensegmente (18, 20) bewegen.

8. Das Verfahren nach einem der vorherigen Ansprüche, wobei besagte höhenfreie Kreuzung aus einer Gruppe ausgewählt ist, die aus (i) einem Tunnel und (ii) einer Unterführung besteht.

## Revendications

1. Procédé de détection d'un croisement à niveaux distincts dans une carte numérique en utilisant des données de capteur, ledit procédé comprenant les étapes de :
fourniture d'une carte numérique ayant au moins deux segments de route (18, 20) se croisant ;
obtention de données en provenance d'une pluralité de traces de capteur se déplaçant le long des au moins deux segments de route (18, 20) au moins sur une partie formant croisement des segments de route (18, 20), lesdites données comprenant la dilution de valeurs de précision (DOP) pour une pluralité d'emplacements le long des au moins deux segments de route ;
**caractérisé en ce que** le procédé comprend les étapes de :
comparaison des valeurs DOP pour les au moins deux segments de route (18, 20) ; et
détermination de la présence ou de l'absence d'un croisement à niveaux distincts (16) entre les au moins deux segments de route (18, 20) en se basant sur ladite comparaison.

2. Procédé selon la revendication 1, comprenant :
la déduction d'un croisement à niveaux distincts (16) entre les au moins deux segments de route (18, 20) si les valeurs DOP pour au moins un des au moins deux segments de route (18, 20) diminue, par exemple d'une valeur sensiblement constante à une valeur diminuée, et ensuite augmente, par exemple revient à la valeur sensiblement constante, à ou au voisinage de la partie formant croisement des segments de route.

3. Procédé selon la revendication 1 ou 2, dans lequel les données obtenues comprennent des données d'altitude, et ledit procédé inclut en outre :
l'association de la valeur DOP pour un emplacement à une valeur d'altitude pour l'emplacement, et de préférence l'association de toutes les valeurs DOP obtenues à la valeur d'altitude pour les emplacements respectifs.

4. Procédé selon l'une des revendications précédentes, dans lequel les données obtenues comprennent des données géocodées et ledit procédé inclut en outre :
l'association de la valeur DOP pour un emplacement à la latitude et la longitude pour l'emplacement, et de préférence l'association de toutes les valeurs DOP obtenues à la latitude et la longitude pour les emplacements respectifs.

5. Procédé selon l'une des revendications précédentes, dans lequel ladite comparaison des valeurs DOP pour les au moins deux segments de route (18, 20) comprend :
la comparaison de la distribution de valeurs DOP obtenues pour chacun des au moins deux segments de route (18, 20).

6. Procédé selon la revendication 5, comprenant :
l'adaptation d'une distribution Gaussienne à la distribution de valeurs DOP obtenues pour chacun des au moins deux segments de route (18, 20) ;
la détermination d'une moyenne pour chacune des distributions Gaussiennes ; et
la comparaison des moyennes pour déterminer la présence ou l'absence d'un croisement à niveaux distincts (16) entre les au moins deux segments de route (18, 20).

7. Procédé selon n'importe laquelle des revendications précédentes, dans lequel lesdites traces de capteur sont produites par une pluralité de véhicules, comme des véhicules automobiles (23, 25), qui comprennent chacun un dispositif de détermination d'emplacement, comme un dispositif validé par GPS, et qui se déplacent sur les au moins deux segments de route (18, 20).

8. Procédé selon n'importe laquelle des revendications précédentes, dans lequel ledit croisement à niveaux distincts est sélectionné à partir du groupe constitué par : (i) un tunnel ; et (ii) un passage souterrain.
